(19) Europäisches Patentamt / European Patent Office / Office européen des brevets

(11) **EP 2 263 060 B1**

(12) **EUROPÄISCHE PATENTSCHRIFT**

(45) Veröffentlichungstag und Bekanntmachung des Hinweises auf die Patenterteilung:
**09.10.2013  Patentblatt 2013/41**

(21) Anmeldenummer: **09725096.3**

(22) Anmeldetag: **11.03.2009**

(51) Int Cl.:
**G01S 11/12** (2006.01)       **G08G 1/16** (2006.01)

(86) Internationale Anmeldenummer:
**PCT/EP2009/001729**

(87) Internationale Veröffentlichungsnummer:
**WO 2009/118098 (01.10.2009 Gazette 2009/40)**

(54) **VERFAHREN UND VORRICHTUNG ZUR PARKLÜCKENERKENNUNG**

METHOD AND DEVICE FOR PARKING GAP RECOGNITION

PROCÉDÉ ET DISPOSITIF DE DÉTECTION D'UNE PLACE LIBRE DE STATIONNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.03.2008  DE 102008016337**
**20.01.2009  DE 102009005554**

(43) Veröffentlichungstag der Anmeldung:
**22.12.2010  Patentblatt 2010/51**

(73) Patentinhaber: **Volkswagen Aktiengesellschaft**
**38440 Wolfsburg (DE)**

(72) Erfinder:
- **AUER, Richard**
  **38442 Wolfsburg (DE)**
- **BROSIG, Stefan**
  **29386 Hankensbüttel (DE)**
- **MOSSAU, Daniel**
  **38448 Wolfsburg (DE)**
- **ROSEBROCK, Dennis**
  **38114 Braunschweig (DE)**
- **SPEHR, Jens**
  **38226 Salzgitter (DE)**

(74) Vertreter: **Meyer, Enno**
**Tegel & Meyer**
**Patentanwälte**
**Planegger Str. 16**
**82110 Germering (DE)**

(56) Entgegenhaltungen:
**EP-A- 1 102 226**        **EP-A2- 1 862 376**
**WO-A-2007/026456**    **DE-A1-102006 003 675**
**US-A1- 2007 063 874**

- **ERIC WAHL ET AL.: "Realisierung eines Parkassistenten basierend auf Motion-Stereo" AACHENER KOLLOQIUM FAHRZEUG- UND MOTORENTECHNIK, Bd. 16, 10. Oktober 2007 (2007-10-10), Seiten 871-880, XP008108847 Aachen, Germany in der Anmeldung erwähnt**

EP 2 263 060 B1

**Beschreibung**

Die Erfindung betrifft ein Verfahren zur Auswahl einer Parklücke bei einer durch ein kamerabasiertes Verfahren bestimmten komplexen Parkplatzsituation gemäß dem Oberbegriff des Anspruchs 1 sowie eine entsprechende Vorrichtung gemäß dem Oberbegriff des Anspruchs 6.

Moderne Kraftfahrzeuge verfügen oftmals über Parkassistentensysteme, die verschiedene Assistenzfunktionen beinhalten können. Derartige Assistenzfunktionen können beispielsweise durch eine Abstandswarnung, eine Anzeige von Informationen über Eignung einer Parklücke, beispielsweise deren Abmessungen, eine Unterstützung des Fahrers beim Einparken, was eine Lenkwinkelvorgabe und sogar einen automatischen Lenkeingriff umfassen kann und/oder ein vollständig automatisiertes Einparksystem realisiert sein.

Um zu einem vollständig automatisierten Einparken zu gelangen, ist das Auffinden geeigneter und ausreichend großer Parklücken notwendig. Zur Bestimmung und Ausmessung möglicher Parklücken wird derzeit überwiegend eine Ultraschallsensorik verwendet. Allerdings kann eine solche Ultraschallsensorik komplexe Parkplatzsituationen, insbesondere Parkplatzsituationen mit einer Parklückenmarkierung, nicht zufriedenstellend bewältigen. Dies liegt einerseits an der geringen Auflösung der Ultraschallsensorik und andererseits daran, dass Parkplatzmarkierungen durch die Ultraschallsensorik nicht erkannt werden können. Folglich werden zwei nebeneinander liegende Kopfparklücken bei der derzeitigen Ultraschallsensorik fälschlicherweise als eine Parallelparklücke erkannt, wodurch der Fahrer in diesem Falle seitens der Parkassistenz keine Unterstützung erhalten kann. Mit anderen Worten, wenn sich die Sensorik irrt, muss der Fahrer wieder selbsttätig einparken.

Ein auf Ultraschalltechnik basierender Parkassistent ist beispielsweise in der Druckschrift DE 10 2006 003 675 A1 beschrieben, die ein Verfahren und eine Vorrichtung zur Festlegung einer bevorzugten Endorientierung eines Kraftfahrzeugs beim Einparken in eine Parklücke für das Parkassistenzsystem des Kraftfahrzeugs betrifft.

Neuere Parkassistenten benutzen kamerabasierte Verfahren zur Parkplatzerkennung, wie dies beispielsweise in Erik Wahl, et al.: "Realisierung eines Parkassistenten, basierend auf Motlon Stereo", 16. Aachener Kolloquium Fahrzeug- und Motorentechnik, 2007, S. 871-880, beschrieben ist. Bei diesem dort beschriebenen Parkassistenzsystem werden Videosysteme bzw. konkrete Bildverarbeitungssysteme verwendet, um einerseits mögliche Parklücken zu detektieren und andererseits das Fahrzeug entweder tellautonom oder autonom elnzuparken. Jedoch auch hier ist das System nicht in der Lage, dem Fahrer optimale Parklücken aus der Vielzahl detektierter möglicher Parklücken anzubieten.

Der Druckschrift EP 1 102 226 A2 kann ein Verfahren zum Betreiben eines Parkassistenzsystems für Fahrzeuge entnommen werden, bei dem mittels eines kamerabasierten Verfahrens eine komplexe Parkplatzsituation bestimmt wird und wobei die Parkplatzsituation mindestens eine möglich Parklücke aufweist.

Der Druckschrift EP 1 862 376 A2 ist ein Verfahren zur Steuerung eines Einparkvorgangs gemäß dem Oberbegriff des Anspruchs 1 zu entnehmen.

Der Erfindung liegt daher die Aufgabe zugrunde, die gattungsgemäßen Verfahren dahingehend zu verbessern, dass dem Fahrer in einer komplexen Parksituation mit beispielsweise mehreren freien Parklücken optimale Parklücken angegeben werden.

Diese Aufgabe wird durch ein Verfahren mit den Merkmalen des Anspruchs 1 sowie durch einen Parkassistenten mit den Merkmalen des Anspruchs 6 gelöst. Bevorzugte Ausführungsformen der Erfindung sind Gegenstand der Unteransprüche.

Bei dem erfindungsgemäßen Verfahren zur Auswahl einer Parklücke für ein Kraftfahrzeug bei einer durch ein kamerabasiertes Verfahren bestimmten komplexen Parkplatzsituation, wobei die komplexe Parkplatzsituation mindestens zwei der Elemente Querlücke, Längslücke und Parkplatzmarklerung aufweist und die Parkplatzsituation mindestens einen erkannten freien Raum aufweist, der für eine mögliche Parklücke ausreichend groß ist,

-   wird jede mögliche Parklücke von vorgegebenen Auswahlkriterien bewertet, wobei die Anzahl der Auswahlkriterien zwei oder mehr beträgt,
-   ist jedem Auswahlkriterium eine Priorität zugeordnet, die der möglichen Parklücke zugeordnet wird, wobei die Prioritäten der Auswahlkriterien voneinander verschieden sind,
-   wird die mögliche Parklücke mit der höchsten Priorität als optimale Parklücke ausgewählt.

Es ist möglich aufgrund der unterschiedliche Prioritäten der Auswahlkriterien zuerst eine mögliche Parklücke mit dem Auswahlkriterium höchster Priorität zu prüfen. Erfüllt die mögliche Parklücke das Auswahlkriterium höchster Priorität nicht, so wird sie mit dem Auswahlkriterium der zweithöchsten Priorität geprüft usw. Dadurch wird sichergestellt, dass jede mögliche Parklücke den ihr zustehenden Prioritätswert erhält, wobei die Prioritätsreihenfolge selbstverständlich veränderbar ist. Mit anderen Worten, die Prioritäten sind vorgegeben, können aber verändert werden.

Eine andere Möglichkeit wäre, dass möglichen Parklücken mehrere Prioritäten zugewiesen werden können. Dazu wird eine mögliche Parklücke zuerst mit dem Auswahlkriterium  höchster Priorität geprüft. Erfüllt die mögliche Parklücke das Auswahlkriterium höchster Priorität, so wird ihr diese Priorität zugewiesen, falls nicht, so wird der möglichen Parklücke in diesem Schritt keine Priorität zugewiesen. Danach wird die mögliche Parklücke mit dem Auswahlkriterium der zweithöchsten Priorität geprüft. Erfüllt die möglich Parklücke dieses Auswahlkriterium, so wird ihr diese Priorität zugewiesen, falls nicht, wird ihr In diesem zweiten Schritt keine Priorität zugewiesen, usw. Dadurch können mögliche Parklücken mehrere Prioritäten aufweisen, was jedoch nicht hinderlich ist, da die höchste zugewiesene Priorität für die Auswahl der möglichen Parklücke entscheidend ist.

Beispielsweise kann die komplexe Parkplatzsituation Querlücken und/oder Längslücken und/oder Parkplatzmarkierungen aufweisen.

Vorzugsweise setzt sich ein Auswahlkriterium aus mindestens einer Bedingung und einer Vorschrift zum Ausrichten der Parklücke für das Eigenfahrzeug zusammen. Dadurch wird bewirkt, dass In einen freien Raum, in den ein Fahrzeug einparken kann, eine Parklücke so gelegt wird, dass das Fahrzeug in sinnvoller Weise abgestellt wird, d.h., die optimale Parklücke, die dem Fahrer angeboten wird, hat eine geeignete Ausrichtung relativ zur Umgebung.

Die bevorzugten Auswahlkriterien des erfindungsgemäßen Verfahrens sind die folgenden, wobei die Aufzählung nicht abschließend zu verstehen ist.

Vorbedingung für alle Kriterien ist, dass die mögliche Parklücke ausreichend groß ist, mit anderen Worten, dass die Ausmessung des freien Raums, d.h. der möglichen Parklücke, ausreichend Raum zum Parken des Fahrzeugs ergibt.

Kriterium a: Der Raum zwischen zwei Parkplatzmarkierungen ist ausreichend. Trifft dies zu, dann wird die optimale Parklücke für das Eigenfahrzeug an den beiden Parkplatzmarkierungen ausgerichtet.

Kriterium b: Der Raum zwischen einer Parkplatzmarkierung und einem erkannten Hindernis, beispielsweise einem erkannten parkenden Fahrzeug, Ist ausreichend groß. Dies hat zur Folge, dass die optimale Parklücke für das Eigenfahrzeug zwischen dem erkannten Hindernis, also dem parkenden Fahrzeug, und der Parkplatzmarkierung ausgerichtet wird.

Kriterium c: Der Raum zwischen zwei erkannten Hindernissen, beispielsweise zwei parkenden Fahrzeugen, oder seitlich eines Hindernisses ist ausreichend groß. Dies hat zur Folge, dass die optimale Parklücke für das Eigenfahrzeug an dem oder den erkannten Hindernissen ausgerichtet wird.

Wie bereits im vorangegangenen angemerkt, ist die Priorität des Kriteriums a größer als die Priorität des Kriteriums b, und diese größer als die Priorität des Kriteriums c. Mit anderen Worten:

$$P \text{ (Kriterium a)} > P \text{ (Kriterium b)} > P \text{ (Kriterium c)}$$

Durch die eindeutige Zuordnung von Prioritäten zu den Auswahlkriterien wird einem freien Raum, d.h., einer möglichen Parklücke, durch die Bewertung oder Überprüfung eine Priorität, d.h., ein Prioritätswert, zugeordnet, wobei die Reihenfolge der Prioritäten der eingesetzten Kriterien eindeutig sein muss, d.h., vorzugsweise sind die Prioritäten der Auswahlkriterien voneinander unterschiedlich. Dadurch ist es möglich, dem Fahrer mindestens eine optimale Parklücke als Funktion seiner aktuellen Situation anzubieten.

Vorzugsweise ist die räumliche Ausrichtung des Kraftfahrzeugs innerhalb der optimalen Parklücke variabel. Die Ausrichtung innerhalb der optimalen Parklücke kann dabei mittig erfolgen, es kann aber auch sein, dass das Kraftfahrzeug außerhalb der Mitte der optimalen Parklücke ausgerichtet wird, damit beispielsweise fahrerseitig mehr Platz ist. Es ist auch denkbar, dass der Fahrer die gewünschte Ausrichtung innerhalb der Parklücke aus einer Anzahl vorgegebener Ausrichtungen auswählen kann.

Ein erfindungsgemäßer Parkassistent zur Durchführung des im vorangegangenen erläuterten Verfahrens umfasst eine kamerabasierte Vorrichtung zur Ermittlung und Bestimmung komplexer Parkplatzsituationen, eine Bewertungseinrichtung, die mögliche Parklücken der komplexen Parkplatzsituation mittels vorgegebener Auswahlkriterien bewertet und jeder möglichen Parklücke eine Priorität zuweist, und eine Auswahleinrichtung, welche die mögliche Parklücke mit der höchsten Priorität auswählt und dem Fahrer als optimale Parklücke vorschlägt.

Vorzugsweise veranlasst der Fahrer nach Auswahl eines Parkplatzes das automatische Einparken in die optimale Parklücke durch den Parkassistenten.

Eine bevorzugte Ausführungsform der Erfindung wird nachfolgend anhand der Zeichnungen näher erläutert. Dabei zeigt:

Fig. 1     ein Beispiel einer ersten komplexen Parkplatzsituation,

Fig. 2    ein Beispiel einer zweiten komplexen Parkplatzsituation,

Fig. 3    ein Beispiel einer dritten komplexen Parkplatzsituation,

Fig. 4    ein Beispiel einer vierten komplexen Parkplatzsituation, und

Fig. 5    ein Beispiel einer fünften komplexen Parkplatzsituation.

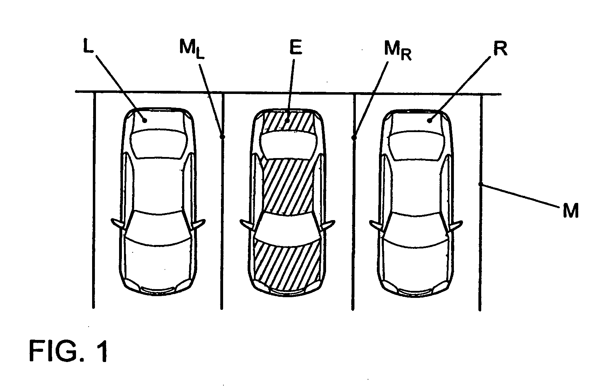

Fig. 1 zeigt in beispielhafter Darstellung eine mit Markierungen M versehene Parkplatzsituation mit zwei von dem kamerabasierten System zur Ermittlung komplexer Parkplatzsituationen aufgefundenen linken Fahrzeug L und rechten Fahrzeug R. Aus der Fig. 1 ist ersichtlich, dass sowohl das aufgefundene linke Fahrzeug L als auch das rechte Fahrzeug R mittig in den durch die Markierungen M bestimmten Parkplätzen parken. Das gestrichelte dargestellte Fahrzeug E ist das Eigenfahrzeug, welches in der Figur 1 bereits in der mittleren Parklücke zwischen den Markierungen $M_L$ und $M_R$ abgestellt werden soll und hier bereits als eingeparkt dargestellt ist. Mit anderen Worten, in Fig. 1 und in den folgenden Figuren symbolisiert das gestrichelt dargestellte Fahrzeug E die optimale Parklücke. Im Fall der Fig. 1 wurde das Kriterium a erfüllt, d.h., es wurde von der Bewertungseinrichtung eine linke Markierung $M_L$ und eine rechte Markierung $M_R$ erkannt, es wurde festgestellt, dass der Abstand A zwischen linker Markierung und rechter Markierung ausreichend ist, d.h. in einem vorgegebenen Bereich liegt. Ferner wurde festgestellt, dass die mögliche Parklücke ausreichend groß ist, d.h. der Raum zwischen dem linken Fahrzeug L und dem rechten Fahrzeug R ausreichend groß und frei verfügbar ist. Folglich wurde die mögliche Parklücke mittels des Kriteriums als optimale Parklücke bewertet und das gestrichelte Eigenfahrzeug E zwischen linker Markierung $M_L$ und rechter Markierung $M_R$ eingeparkt. Dabei kommt es gemäß Kriterium a auf die Parkplatzmarkierungen $M_L$ und $M_R$ an und die relative Ausrichtung der Fahrzeuge R,L ist unerheblich.

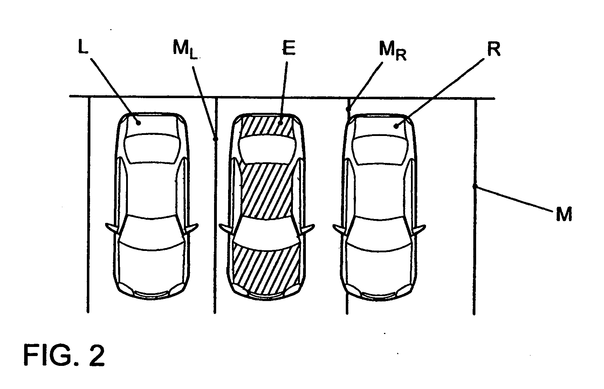

Fig. 2 zeigt die Situation einer möglichen Parklücke zwischen einer linken Parkplatzmarkierung $M_L$ und einem rechten Fahrzeug R, wobei das rechte Fahrzeug R die eigentlich seinem Parkplatz zugehörige rechte Markierung $M_R$ zumindest teilweise verdeckt. Ferner ist der Raum zwischen dem rechten Fahrzeug R und der linken Parkplatzmarkierung $M_L$ ausreichend . Folglich trifft für die Situation der Fig. 2 das Kriterium b zu, nämlich dass das Eigenfahrzeug E mittig zwischen der linken Parkplatzmarkierung $M_L$ und dem rechten Fahrzeug R eingeparkt wird. Dabei kommt es auf die Ausrichtung des linken Fahrzeugs L nicht an.

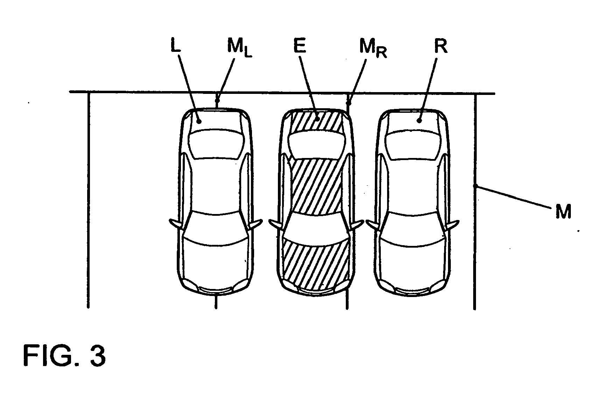

In Fig. 3 ist der Raum zwischen der rechten Parkplatzmarkierung $M_R$ und dem linken Fahrzeug L zum Parken nicht ausreichend groß, so dass Kriterium b nicht erfüllt ist. Allerdings ist der Raum zwischen dem linken Fahrzeug L und dem rechten Fahrzeug R ausreichend groß und Kriterium c kommt zum Tragen. Daher wird die erkannte mögliche Parklücke mit dem Kriterium c bewertet und das Eigenfahrzeug E wird mittig zwischen den beiden parkenden Fahrzeugen L, R eingeparkt.

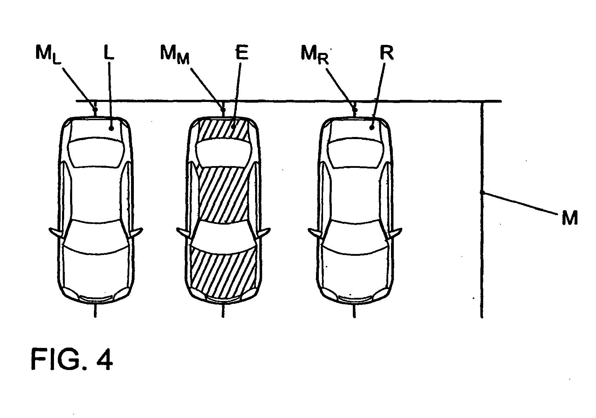

Ein ähnlicher Zustand ist in Fig. 4 dargestellt, hier stehen beide erkannten Fahrzeuge L, R auf den Parkplatzmarkierungen $M_R$ und $M_L$, allerdings ist der Raum zwischen den beiden Fahrzeugen L, R ausreichend groß, so dass ebenfalls Kriterium c zur Anwendung kommt. Der Parkassistent richtet das Eigenfahrzeug E mittig zwischen den beiden Fahrzeugen L, R aus. Der Unterschied zu Fig. 3 ist, dass sowohl das linke Fahrzeug L als auch das rechte Fahrzeug R auf den Markierungen $M_R$ und $M_L$ geparkt sind. Es wird daher sowohl der Raum zwischen dem linken Fahrzeug L und der mittigen Markierung $M_M$ als auch der Raum zwischen dem rechten Fahrzeug R und der mittigen Markierung $M_M$ überprüft und beide Räume sind zum Einparken des Eigenfahrzeugs E nicht ausreichend. Also kommt Kriterium b nicht zur Anwendung sondern Kriterium c und es wird mittig zwischen den beiden Fahrzeugen L, R auf der Markierung $M_M$ eingeparkt. Allerdings muss die Ausrichtung nicht zwangsläufig mittig sein, sondern es kann beispielsweise fahrerseitig mehr Platz frei bleiben, was in dem Beispiel zu einer Verschiebung der Parkposition zum linken Fahrzeug L führen würde.

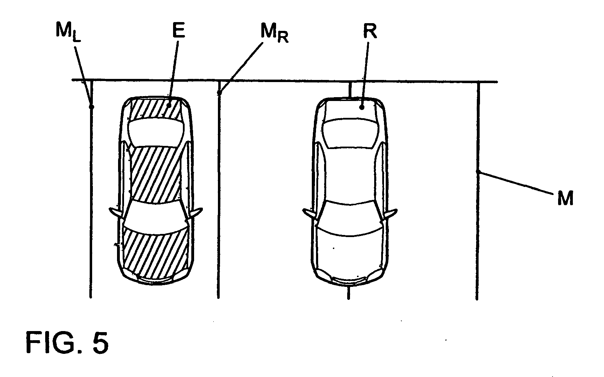

Fig. 5 schließlich zeigt eine Situation mit einem parkenden Fahrzeug R, d.h. Hindernis, auf einem Parkplatz mit Markierungen M. In dieser Situation können zwei Parklücken in Fig. 5 links von dem Fahrzeug R erkannt werden. Die eine Möglichkeit wäre direkt links neben dem  Fahrzeug R gelegen. In diesem Fall wäre Kriterium c erfüllt. Die andere Möglichkeit wäre zwischen den beiden Markierungen $M_R$ und $M_L$ angeordnet. Diese beiden Möglichkeiten überlappen. Nach der hier angegebenen Priorisierung wird die Parklücke zwischen den beiden Markierungen $M_R$ und $M_L$ gewählt. Parklücken mit Kriterium a sind sozusagen "besser" als Parklücken mit Kriterium c. Bei Überlappungen wird die Parklücke mit der höheren Priorität angezeigt.

**BEZUGSZEICHENLISTE**

E    Eigenfahrzeug

L        Linkes Fahrzeug

R        Rechtes Fahrzeug

M        Markierungen

$M_L$        linke Markierung

$M_R$        rechte Markierung

$M_M$        mittige Markierung

**Patentansprüche**

1.  Verfahren zur Auswahl einer Parklücke für ein Kraftfahrzeug bei einer durch ein kamerabasiertes Verfahren bestimmten komplexen Parkplatzsituation, wobei die komplexe Parkplatzsituation mindestens zwei der Elemente Querlücke, Längslücke und Parkplatzmarkierung aufweist und die Parkplatzsituation mindestens einen erkannten freien Raum aufweist, der für eine möglichen Parklücke ausreichend groß Ist,
    **dadurch gekennzeichnet, dass**
    Jede mögliche Parklücke von vorgegebenen Auswahlkriterien bewertet wird, wobei die Anzahl der Auswahlkriterien zwei oder mehr beträgt,
    jedem Auswahlkriterium eine Priorität zugeordnet ist, die der möglichen Parklücke zugeordnet wird, wobei die Prioritäten der Auswahlkriterien voneinander verschieden sind,
    die mögliche Parklücke mit der höchsten Priorität als optimale Parklücke ausgewählt wird.

2.  Verfahren nach Anspruch 1, **dadurch gekennzeichnet, dass** ein Auswahlkriterium sich aus mindestens einer Bedingung und einem Ausrichten der optimalen Parklücke zusammensetzt.

3.  Verfahren nach Anspruch 2, **dadurch gekennzeichnet, dass** mindestens die folgenden Auswahlkriterien zum Einsatz kommen:

    erstes Kriterium a, so dass, wenn der Raum zwischen zwei Parkplatzmarkierungen ausreichend ist, die optimale Parklücke für das Eigenfahrzeug an den beiden Parkplatzmarkierungen ausgerichtet wird;
    zweites Kriterium b, so dass, wenn der Raum zwischen einer Parkplatzmarkierung und einem erkannten Hindernis ausreichend groß ist, die optimale Parklücke für das Eigenfahrzeug an dem erkannten Hindernis ausgerichtet wird;
    drittes Kriterium c, so dass, wenn der Raum zwischen zwei erkannten Hindernissen oder seitlich eines Hindernisses ausreichend groß ist, die optimale Parklücke für das Eigenfahrzeug an dem oder den erkannten Hindernissen ausgerichtet wird.

4.  Verfahren nach Anspruch 3, **dadurch gekennzeichnet, dass** für die Prioritäten der Auswahlkriterien gilt, dass die Priorität des Kriteriums a größer ist als die Priorität des Kriteriums b, die ihrerseits größer ist als die Priorität des Kriteriums c.

5.  Verfahren nach einem der vorangegangenen Ansprüche, **dadurch gekennzeichnet, dass** die räumliche Ausrichtung des Kraftfahrzeugs innerhalb der optimalen Parklücke variabel ist.

6.  Parkassistent zur Durchführung des Verfahrens nach einem der vorangegangenen Ansprüche mit
    einer kamerabasierten Vorrichtung zur Ermittlung komplexer Parkplatzsituationen, wobei die komplexe Parkplatzsituation mindestens zwei der Elemente Querlücke, Längslücke und Parkplatzmarkierung aufweist, und die Parkplatzsituation mindestens einen erkannten freien Raum aufweist, der für eine mögliche Parklücke ausriechend groß ist, **dadurch gekennzeichnet, dass**
    einer Bewertungseinrichtung, die mögliche Parklücken der komplexen Parkplatzsituation mittels vorgegebener Auswahlkriterien bewertet und jeder möglichen Parklücke eine Priorität zuweist, wobei die Anzahl der Auswahlkriterien zwei oder mehr beträgt, jedem Auswahlkriterium eine Priorität zugewiesen ist, und die Prioritäten der Auswahlkriterien voneinander verschieden sind, und
    einer Auswahleinrichtung, welche die mögliche Parklücke mit der höchsten Priorität auswählt und dem Fahrer als optimale Parklücke vorschlägt.

**7.** Parkassistent nach Anspruch 8, **dadurch gekennzeichnet, dass** der Fahrer nach Auswahl eines Parkplatzes das automatische Einparken in die optimale Parklücke veranlasst.

## Claims

**1.** Method for selecting a parking space for a motor vehicle in a complex car park situation which is determined by a camera-based method, wherein the complex car park situation has at least two of the elements of transverse parking space, longitudinal parking space and parking space marking, and the car park situation has at least one detected free space which is sufficiently large for a possible parking space,
**characterized in that**
every possible parking space is evaluated using predefined selection criteria, wherein the number of selection criteria is two or more,
each selection criterion is assigned a priority which is assigned to the possible parking space, wherein the priorities of the selection criteria are different from one another, and
the possible parking space with the highest priority is selected as an optimum parking space.

**2.** Method according to Claim 1, **characterized in that** a selection criterion is composed of at least one condition and one orientation of the optimum parking space.

**3.** Method according to Claim 2, **characterized in that** at least the following selection criteria are used:

first criterion a, with the result that, if the space between two parking space markings is sufficient, the optimum parking space for the vehicle in question is oriented according to the two parking space markings;
second criterion b, with the result that, if the space between a parking space marking and a detected obstacle is sufficiently large, the optimum parking space for the vehicle in question is oriented according to the detected obstacle; and
third criterion c, with the result that, if the space between two detected obstacles or to the side of an obstacle is sufficiently large, the optimum parking space for the vehicle in question is oriented according to the detected obstacle or obstacles.

**4.** Method according to Claim 3, **characterized in that**, for the priorities of the selection criteria, it is the case that the priority of the criterion a is larger than the priority of the criterion b, which is itself larger than the priority of the criterion c.

**5.** Method according to one of the preceding claims, **characterized in that** the spatial orientation of the motor vehicle within the optimum parking space is variable.

**6.** Parking assistant for carrying out the method according to one of the preceding claims, having a camera-based device for identifying complex car park situations, wherein the complex car park situation has at least two of the elements of transverse parking space, longitudinal parking space and parking space marking, and the car park situation has at least one detected free space which is sufficiently large for a possible parking space, **characterized by** an evaluation device, which evaluates possible parking spaces of the complex car park situation by means of predefined selection criteria and assigns a priority to each possible parking space, wherein the number of selection criteria is two or more, each selection criterion is assigned a priority, and the priorities of the selection criteria are different from one another, and a selection device, which selects the possible parking space with the highest priority and proposes it to the driver as an optimum parking space.

**7.** Parking assistant according to Claim 6, **characterized in that**, after a parking space has been selected, the driver brings about automatic parking in the optimum parking space.

## Revendications

**1.** Procédé de sélection d'une place de stationnement pour un véhicule automobile en présence d'un emplacement complexe de place de stationnement défini par un procédé basé sur une caméra, l'emplacement complexe de place de stationnement comportant au moins deux éléments parmi un espace transversal, un espace longitudinal et un marquage de place de stationnement et l'emplacement de place de stationnement comportant au moins un espace libre détecté suffisamment grand pour constituer une possible place de stationnement ;
**caractérisé en ce que** :

chaque place de stationnement possible est analysée au moyen de critères de sélection prédéfinis, le nombre de critères de sélection étant de deux ou plus ;
une priorité étant associée à chaque critère de sélection à laquelle la place de stationnement possible est associée, les priorités des critères de sélection étant différentes les unes des autres ;
la place de stationnement possible étant sélectionnée en toute première priorité comme place de stationnement optimale.

2. Procédé selon la revendication 1, **caractérisé en ce qu'**un critère de sélection se compose d'au moins une condition et d'une orientation de place de stationnement optimale.

3. Procédé selon la revendication 2, **caractérisé en ce qu'**au moins les critères de sélection suivants sont utilisés :

premier critère a, de sorte que lorsque l'espace entre deux marquages de place de stationnement est suffisant, la place de stationnement optimale pour le véhicule en question est orientée en fonction des deux marquages de place de stationnement ;
deuxième critère b, de sorte que lorsque l'espace entre un marquage de place de stationnement et un obstacle détecté est suffisamment grand, la place de stationnement optimale est orientée en fonction de l'obstacle détecté pour le véhicule en question ;
troisième critère c, de sorte que lorsque l'espace entre deux obstacles détectés ou à côté d'un obstacle est suffisamment grand, la place de stationnement optimale pour le véhicule en question est orientée en fonction du ou des obstacles détectés.

4. Procédé selon la revendication 3, **caractérisé en ce que** les priorités des critères de sélection s'appliquent de la façon suivante : la priorité du critère a est supérieure à la priorité du critère b, à son tour supérieure à la priorité du critère c.

5. Procédé selon l'une quelconque des revendications précédentes, **caractérisé en ce que** l'orientation dans l'espace du véhicule automobile peut varier à l'intérieur de place de stationnement optimale.

6. Système d'aide au stationnement permettant de mettre en oeuvre le procédé selon l'une quelconque des revendications précédentes doté :

d'un dispositif basé sur une caméra servant à calculer des emplacements complexes de place de stationnement, l'emplacement complexe de place de stationnement comportant au moins deux éléments parmi un espace transversal, un espace longitudinal et un marquage de place de stationnement et l'emplacement de place de stationnement comportant au moins un espace libre détecté suffisamment grand pour constituer une possible place de stationnement ;
**caractérisé par** :

un dispositif d'estimation qui analyse des places de stationnement possibles de l'emplacement complexe de place de stationnement à l'aide de critères de sélection prédéfinis et qui assigne une priorité à chaque place de stationnement possible, le nombre de critères de sélection étant de deux ou plus, une priorité étant associée à chaque critère de sélection, et les priorités des critères de sélection étant différentes les unes des autres ; et
un dispositif de sélection qui sélectionne en première priorité la place de stationnement possible et la propose au conducteur comme place de stationnement optimale.

7. Système d'aide au stationnement selon la revendication 6, **caractérisé en ce que** le conducteur déclenche le stationnement automatique dans la place de stationnement optimale après sélection d'une place de stationnement.

FIG. 1

FIG. 2

FIG. 3

FIG. 4

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006003675 A1
- EP 1102226 A2
- EP 1862376 A2

**In der Beschreibung aufgeführte Nicht-Patentliteratur**

- **ERIK WAHL et al.** Realisierung eines Parkassistenten, basierend auf Motlon Stereo. *Aachener Kolloquium Fahrzeug- und Motorentechnik,* 2007, vol. 16, 871-880